# EUROPEAN PATENT APPLICATION

(11) **EP 4 310 791 A1**
(43) Date of publication of application: **24.01.2024**
(21) Application number: 22185768.3
(22) Date of filing: 19.07.2022
(51) Int. Cl.: G06V 10/46, G06V 10/74, G06V 10/762, G06V 10/772, G06V 10/774, G06V 10/82, G06V 20/56

(54) **TRAINING A PERCEPTION NEURAL NETWORK FOR DRIVING APPLICATIONS**

(71) Applicant: Valeo Comfort and Driving Assistance, 94000 Créteil (FR)
(72) Inventor: GIDARIS, Spyridon, 94000 Creteil (FR); JAIN, Himalaya, 94000 Creteil (FR); BURSUC, Andrei, 94000 Creteil (FR); VU, Tuan Hung, 94000 Creteil (FR)
(74) Representative: Jauregui Urbahn, Kristian

(57) **Abstract**

A computer-implemented method of training a perception neural network (Pu, Pt) for comprises extracting a feature map (F) from images by applying an auxiliary neural network (Φ), generating a vocabulary (V) of visual words by applying a k-means clustering algorithm, which is based on K clusters (C), on local feature sets of the feature maps (F), the visual word being given by a centroid a cluster (C), and determining closest visual words. Quantized feature maps (Q) consisting of the closest visual words and K-dimensional local bag-of-words vectors (α) at respective pixel positions are generated. The perception neural network (Pu, Pt) is trained in a semi-supervised way simultaneously on a visual perception task and an auxiliary task, which comprises predicting the respective auxiliary label maps (A) of perturbed versions of the images of the input set (la, lb).

## Description

The present invention is directed to a computer-implemented method of training a perception neural network for autonomous or semi-autonomous driving applications. The invention is further directed to a computer program product and to a visual perception system for autonomous or semi-autonomous driving applications.

Many autonomous driving functions or semi-autonomous driving functions for vehicles are based on visual perception tasks, which are carried out, for example, based on camera images received from vehicle cameras. Such visual perception tasks may for example include object detection tasks, semantic segmentation tasks, classification tasks et cetera. Computer vision algorithms, which are able to carry out visual perception tasks, may be based on trained artificial neural networks, for example convolutional neural networks, CNNs. In order to build such a computer vision algorithm, it is typically required to collect a very large set of training images, which are annotated or labeled with the desired outputs, for example with respective bounding boxes of objects in the environment of the vehicle in case of an object detection task, or with the semantic label of each pixel of a camera image in case of an semantic segmentation task. The annotation or labeling may be done manually by humans. However, manually annotating large sets of training images is extremely time consuming.

It is therefore generally desirable to be able to train computer vision algorithms with less effort for annotating training images, in particular with a lower amount of labeled training images. In the publications S. Gidaris et al.: "Learning Representations by Predicting Bags of Visual Words", Proceedings to the IEEE/CVF Conference on Computer Vision and Pattern Recognition 2020, pp. 6928-6938 and S. Gidaris: "OBoW: Online Bag-of-Visual-Words Generation for Self-Supervised Learning", Proceedings of the IEEE/CVF Conference on Computer Vision and Pattern Recognition 2021, pp. 6830-6840, the authors propose to create automatic annotations for images based on a bag-of-words, BoW, approach. The annotated images may be used for pre-training a convolutional neural network without requiring human or manual annotations. Then, the pre-trained network may be fine-tuned on the final visual perception task of interest with few human annotations.

These approaches may work well for object-centric images, wherein a single object is depicted approximately in the center of the image. However, since only a single or global bag-of-words is used for each image, they are not generally adequate for autonomous driving or semi-autonomous driving applications, wherein the images depict multiple objects at various sizes and image positions.

It is an objective of the present invention to reduce the necessary amount for human or manual annotations of training images for training a perception neural network for autonomous or semi-autonomous driving applications, in particular for training images, which depict multiple objects at various sizes and/or image positions.

This objective is achieved by the subject-matter of the independent claim. Further implementations and preferred embodiments are subject-matter of the dependent claim.

The invention is based on the idea to create local bag-of-words annotations in a pixel-wise manner for each image and to train the perception neural network simultaneously on a desired visual perception main task and on an auxiliary task, which comprises predicting auxiliary labels generated based on the local bag-of-words annotations. Due to the simultaneous training on the visual perception main task and the auxiliary task, the training results may be significantly improved, which allows to reduce the number of labeled training images for training on the visual perception main task.

According to an aspect of the invention, a computer implemented method for training a perception neural network for autonomous or semi-autonomous driving applications is provided. According to the method, an input set of images is provided, wherein each image of the input set of images comprises a number of h*w pixels at respective pixel positions, wherein h and w denote respective spatial dimensions of the respective image. A respective feature map of size c*h*w is extracted from each image of the input set or, in other words, is computed based on each image of the input set, by applying an auxiliary neural network to the respective image. Therein, c denotes a number of feature channels of the feature map and the feature map consists of a number h*w of c-dimensional local feature sets, wherein each of the local feature sets corresponds to one, in particular exactly one, of the pixel positions.

A vocabulary of a number K of visual words is generated by applying a k-means clustering algorithm on the local feature sets of all pixel positions, in particular applying the k-means clustering algorithms to all local feature sets of all images of the input set for all pixel positions. In particular, the vocabulary is generated as a single common vocabulary for all of the pixel positions based on the local feature sets extracted from all the pixel positions. The k-means clustering algorithm is based on K clusters, and each visual word of the vocabulary is given by a respective centroid of one of the K clusters. In other words, for each of the K clusters, a centroid is computed and a respective visual word is given by the respective centroid.

For each pixel position of each of the images of the input set, a respective closest visual word of the vocabulary is determined. Therein, the closest visual word is given by the visual word of the vocabulary, whose distance from the respective local feature set is minimum. In other words, for each visual word of the vocabulary, the distance from the respective local feature set is computed and the visual word with the minimum distance is representing the closest visual word. If more than one visual word has the minimum distance, one of them may be selected randomly or according to another predefined rule.

A respective quantized feature map is generated for each of the images of the input set, wherein the quantized feature map consists of respective representations of the closest visual words for all pixel positions of the respective image. For each pixel position of each of the images of the input set, a respective K-dimensional local bag-of-words vector is generated. Therein, each entry of the local bag-of-words vector corresponds to one of the K visual words of the vocabulary at the respective pixel position and depends on a number of times the respective visual word occurs in a predefined spatial neighborhood of the respective pixel position in the quantized feature map of the respective image. A local bag-of-words vector is a bag-of-words vector, which may be considered local since it is associated to a single pixel position.

The local bag-of-words vectors, in particular all local bag-of-words vectors of all pixel positions and all images of the input set, are used as auxiliary label maps for training the perception neural network in a semi-supervised way by training the perception neural network on a predefined main task of the perception neural network and on an auxiliary task. Therein, the main task is a predefined visual perception task, for example an object detection task or a semantic segmentation task or a classification task. The auxiliary task comprises predicting the respective auxiliary label maps of perturbed versions of the images of the input set.

In particular, the perception neural network is trained in a supervised way on the main task and in an unsupervised way on the auxiliary task, which results in a semi-supervised training of the perception neural network all together. Therein, the supervised training of the perception neural network on the main task may be understood such that labeled or, in other words, annotated, training data or training images are used, wherein the labeling is provided according to the desired visual perception task. The labeled training data may be part of the input set or provided additionally. The unsupervised training of the perception neural network on the auxiliary task, on the other hand, is done independent of predetermined labels, but relies on the auxiliary label maps, which are automatically generated as described.

The perception neural network may be understood as an artificial neural network, in particular a convolutional neural network, CNN, for carrying out a visual perception task, for example, an object detection task or a semantic segmentation task or a classification task. The auxiliary neural network may also be understood as an artificial neural network, in particular a CNN, for example, a pre-trained CNN, which is trained to generate a feature map from an image.

The images of the input set are, for example, multi-channel images or multi-color images, respectively. For example, each image may have a number of color channels, for example three color channels in case of an RGB image. However, different color models may also be used. Furthermore, a number of convolutional kernels may be involved in the application of the auxiliary neural network to the images. Consequently, the number c of feature channels resulting from the application of the auxiliary neural network to the image may depend on or may be given by the number of channels of the image and the number of convolutional kernels of the auxiliary neural network and, for example, on an architecture of the auxiliary neural network. In particular, the number c of feature channels may depend on the number of output channels of the last convolutional kernel and/or layer of the auxiliary neural network.

Each of the local feature sets may be considered as a vector or a feature vector or local feature vector. Furthermore, also a visual word is given by a corresponding vector, which represents the centroid of the corresponding cluster. Thus, any suitable distance measure definable for vectors of the same dimension, namely c in the present case, may be used to compute the distance of visual words from local feature sets. For example, the distance may correspond to a Euclidean distance or a cosine distance.

The quantized feature map may be understood as being given by the corresponding feature map of the respective image, wherein each local feature set is replaced by the representation of the corresponding closest visual word.

The representation of a visual word of the vocabulary may for example be denoted as an index or identificator of the respective visual word. For example, each visual word of the vocabulary has an associated unique number as the index or identificator. In other words, K different indices or identificators may be uniquely assigned to the K visual words of the vocabulary to defined said representations of the visual words. The K different indices or identificators may for example be integer numbers from 1 to K. The representation of a visual word may also be given for example by a one-hot K-dimensional vector where all the entries of this vector are zero apart from the entry that corresponds to the respective visual word. In particular, this one-hot K-dimensional vector of a local feature essentially encodes the index of its closest visual word

The spatial neighborhood may for example be a neighborhood of n*n pixel positions around the considered pixel position including the considered pixel position itself. Therein, n may for example be an integer, which is equal to or greater than 2, for example equal to or greater than 3. For example, n may range from 3 up to 31. For example, n may be equal to 3, 4 or 5.

Computing the auxiliary label of a pixel as the bag-of-words vector of its spatial neighborhood with n equal to or greater than 2, in particular equal to or greater 3, leads to better auxiliary labels than when computing the auxiliary label of a pixel as the closest visual word assignment of that pixel. In particular, the former has the advantage of leading to auxiliary labels that describe or characterize the pixels in a more complete way compared, since the auxiliary label of each pixel encodes multiple local visual concepts in terms of visual words extracted in a spatially dense way from the spatial neighborhood of the pixel.

For example, for each of the images of the input set, a corresponding auxiliary label map may be generated, wherein the auxiliary label map consists of the local bag-of-words vectors for all pixel positions of the respective image.

That the auxiliary task comprises predicting respective auxiliary label maps of perturbed versions of the images may for example be understood such that for a given image of the input set, a perturbed version is computed. Then, the respective auxiliary label map of the unperturbed image may also be associated to the perturbed version. The auxiliary task then comprises predicting the correct associated auxiliary map given the perturbed image as an input.

Since the images of the input set are two-dimensional images, for example with h rows and w columns of pixels, each pixel position may be defined by a first pixel coordinate, which is an integer from 1 to h, and a second pixel coordinate, which is an integer from 1 to w. Alternatively, each pixel position may be given by a single integer u, which is an integer from 1 to h*w.

Since the k-means clustering algorithm is used to cluster the local feature sets, which are c-dimensional vectors, also a visual word is given by a corresponding c-dimensional vector, as mentioned above.

The local bag-of-words vector for a given image and a given pixel position has K entries, each of them corresponding to one of the K visual words of the vocabulary. The entry depends on the number of times the respective visual word occurs in the spatial neighborhood. For example, the entry may encode or, in other words, be equivalent to, or even be identical to the number of times the respective visual word occurs in the spatial neighborhood. In other words, the local bag-of-words vector may be considered as a one-dimensional histogram of the respective visual words in the spatial neighborhood.

In alternative implementations, the local bag-of-words vector may be a binary vector. That is, each entry of the local bag-of-words vector is either equal to a first binary value, for example 0, or equal to a second binary value, for example 1. For example, the entry of the local bag-of-words vector may be 0, if the corresponding visual word does not occur at all in the spatial neighborhood and it may be 1, if it occurs at least once or at least a predefined number of times in the spatial neighborhood, or vice versa.

It is noted that, in some implementations, the input set of images may comprise a subset of labeled images and a subset of unlabeled images. In this case, training the perception neural network on the main task may for example be carried out based on the subset of labeled images.

In this case, the auxiliary label maps are for example computed for all of the labeled images and for all of the unlabeled images. The auxiliary task may then for example be trained based on the labeled images, however, without using the respective labels, and based on the unlabeled images, while the main task is trained based on the labeled images only, wherein the respective labels are used.

By training the auxiliary task in parallel to the main task, the result for training the main task is inherently improved, even though the result of the auxiliary task is not used for the main task but is only carried out in parallel to improve the learning procedure. In other words, in general a loss computed according to the result of the auxiliary task and a loss computed according to the result of main task may be used for modifying network parameters, for example weights, of the perception neural network, the result of the auxiliary task does not directly affect the result of the main task.

Consequently, the total number of labeled images may be reduced and the overall training performance for the main task is still high due to auxiliary task being learned simultaneously. The number of labeled images may be reduced, in particular, compared to a scenario, where the auxiliary task is not trained in parallel to the main task.

In other implementations, the input set of images consists of labeled images or, in other words, does not comprise unlabeled images. In this case, the main task as well as the auxiliary task are both trained based on the labeled images. However, while the main task is trained exploiting the labels of the labeled images in a supervised manner, the labels are not used for training the auxiliary task such that it is realized as an unsupervised training. Also in this case, the number of labeled images may be reduced compared to a situation where only the main task would be trained. A further advantage of this approach is that unlabeled images are not necessary, which further reduces the effort of providing training images. On the other hand using both, labeled and unlabeled images, as in the implementations described above, may lead to an even improved training performance or to a faster training convergence.

In yet a further implementation, the input set of images consists of unlabeled images or, in other words, does not comprise labeled images. In this case, a further input set of labeled images is provided and the training of the perception neural network on the main task is carried out based on the further input set of labeled images, while the training of the perception neural network on the auxiliary task is based on the unlabeled images only, since the labeled images do not have associated auxiliary label maps in this case. An advantage of this approach is that the effort for generating the auxiliary label maps is reduced, since it is only done for the unlabeled images but not for the further set of labeled images.

In all three cases, however, the number of labeled images to be used for training the main task may be reduced without reducing or without significantly reducing the training performance or even with improving the training performance.

Since the local bag-of-words vectors are used or, in other words, a bag-of-words vector is used for each pixel of each image, the inventive method is particularly suitable for using images, which depict various objects on various positions of the input images and/or with various sizes. Therefore, the approach is particularly suitable for training models for autonomous or semi-autonomous driving applications compared, for example, to an approach using a global bag-of-words for the whole image.

According to several implementations of the computer implemented method, the entry of the local bag-of-words encodes the number of times the respective visual word occurs in the spatial neighborhood, in particular is equivalent, for example, identical, to the number of times the respective visual word occurs in the spatial neighborhood.

An advantage of such an implementation is that the amount of information contained by the local bag-of-words vectors is particularly large, which may improve the performance of training the main task indirectly by increasing the complexity of the auxiliary task. According to several alternative implementations, the entry of the local bag-of-words vector encodes whether or not the respective visual word occurs in the spatial neighborhood at least a predefined number of times, for example at least once.

According to several implementations, the method steps of providing the input set, extracting the respective feature map from each image of the input set, generating the vocabulary, determining the respective closest visual word for each of the pixel positions of each of the images and generating the respective quantized feature map for each of the images, are repeated, wherein for the repetition, the auxiliary neural network is replaced by at least a part of the perception neural network trained or partially trained according to the described step of the semi-supervised training.

In general, the perception neural network may comprise different blocks or modules depending on the main visual perception task, for example. In several typical architectures, the perception neural network may have an encoder block or a feature generation module, which consumes an image as an input and generates a corresponding c*h*w feature map as the auxiliary neural network does. In order to carry out the main task, the perception network may have a decoder block or another task-specific or task-agnostic module, which consumes the feature map and outputs the desired result of the visual perception task, for example characteristics of respective bounding boxes or objects in case of an object detection task, pixel level labels in case of a semantic segmentation task, image labels in case of an image classification task et cetera. Therefore, once the perception neural network is at least partially trained, its feature generation module or encoder block may be used instead of the auxiliary neural network.

In particular, after repeating said steps with the auxiliary neural network being replaced as described above, the resulting local bag-of-words vectors may again be used as auxiliary label maps for further training the perception neural network as described above.

According to several implementations, the perturbed versions of the images of the input set are obtained by using color jittering, which includes for example randomly changing a contrast and/or a hue, and/or a saturation of the respective image. Alternatively or in addition, the perturbed versions of the images may be obtained by using image blurring. Alternatively or in addition, the perturbed versions of the images of the input set may be obtained using a random conversion of the respective image to grayscale.

Alternatively or in addition, the perturbed versions of the images of the input set may be obtained by applying a geometric transformation to the respective image. The geometric transformation may, for example, include a random crop operation, a random rotation operation, a random change of aspect ratio operation, a random change of scale operation, and/or a horizontal flipping operation, and/or a vertical flipping operation. The same geometric transformation applied to an image to generate the perturbed version is also applied accordingly to the respective auxiliary label map.

Alternatively or in addition, the perturbed versions of the images of the input set are obtained by cutting out random regions from the respective image.

According to several implementations, the auxiliary neural network is pre-trained, in particular prior to applying the auxiliary neural network to one of the images of the input set for the first time.

The pre-training may for example be carried out using a supervised training on a further labeled dataset, for example using ImageNet, or by using a self-supervised pre-training technique on the images of the input set.

In several implementations, where the input set comprises the labeled images, the auxiliary neural network is pre-trained using a supervised pre-training technique on the images of the input set.

In several implementations, where the input set comprises the labeled images and the unlabeled images, the auxiliary neural network is pre-trained using a semi-supervised pre-training technique on the labeled images and the unlabeled images of the input set.

Alternatively, in some implementations, the auxiliary neural network is not pre-trained prior to applying the auxiliary neural network to an image of the input set for the first time. In such implementations, the auxiliary neural network may be built by randomly initializing its weights.

According to a further aspect of the invention, a computer program product for processing data relating to training a perception neural network for autonomous or semi-autonomous driving applications is provided. The computer program product comprises a computer usable medium having a computer usable program code embodied therewith, the computer usable program code being configured to perform the steps of an implementation of the computer implemented method according to the invention, in particular when executed by a data processing apparatus.

The computer usable medium may also be denoted as computer-readable storage medium, and the computer usable program code may also be denoted as computer-readable program code.

According to several implementations, a visual perception system for autonomous or semi-autonomous driving applications is provided. The visual perception system comprises a computer program product for processing data relating to training a perception neural network such as to perform the steps of an implementation of a computer implemented method according to the invention.

Depending on the visual perception task, the visual perception system may, for example, be an object determining system, a semantic segmentation system a classification system et cetera.

A visual perception task, also denoted as computer vision task, may for example be understood as a task for extracting visual information from image data. In particular, the visual perception task may in principle be performed by a human, which is able to visually perceive an image corresponding to the image data. In the present context, however, visual perception tasks are performed automatically without requiring the support of a human. A visual perception task may for example include an object detection task, an obstacle detection task, an object tracking task, a classification task, and/or a segmentation task.

A computer vision algorithm, which may also be denoted as machine vision algorithm or algorithm for automatic visual perception, may be considered as a computer algorithm for performing a visual perception task automatically. For example, a computer vision algorithm may be understood as an image processing algorithm or an algorithm for image analysis, which is trained using machine learning and may for example be based on an artificial neural network, in particular a convolutional neural network. In the present disclosure, the computer vision algorithm may, in particular, be carried out by the perception neural network, in particular by the trained perception neural network.

For example, the computer vision algorithm may include an object detection algorithm, an obstacle detection algorithm, an object tracking algorithm, a classification algorithm, and/or a segmentation algorithm.

Unless stated otherwise, all steps of the computer-implemented method may be performed by at least one computing unit, which may also be denoted as a data processing apparatus. In particular, the data processing apparatus comprises at least one processing circuit, which is configured or adapted to perform the steps of the computer-implemented method. For this purpose, the data processing apparatus may for example store a computer program comprising instructions which, when executed by the data processing device, in particular the at least one processing circuit, cause the data processing apparatus to execute the computer-implemented method.

A computing unit may in particular be understood as a data processing device, which comprises processing circuitry. The computing unit can therefore in particular process data to perform computing operations. This may also include operations to perform indexed accesses to a data structure, for example a look-up table, LUT.

In particular, the computing unit may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing unit may also include one or more processors, for example one or more microprocessors, one or more central processing units, CPU, one or more graphics processing units, GPU, and/or one or more signal processors, in particular one or more digital signal processors, DSP. The computing unit may also include a physical or a virtual cluster of computers or other of said units.

In various embodiments, the computing unit includes one or more hardware and/or software interfaces and/or one or more memory units.

A memory unit may be implemented as a volatile data memory, for example a dynamic random access memory, DRAM, or a static random access memory, SRAM, or as a nonvolatile data memory, for example a read-only memory, ROM, a programmable read-only memory, PROM, an erasable programmable read-only memory, EPROM, an electrically erasable programmable read-only memory, EEPROM, a flash memory or flash EEPROM, a ferroelectric random access memory, FRAM, a magnetoresistive random access memory, MRAM, or a phase-change random access memory, PCRAM.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, may also be comprised by the invention. Moreover, embodiments and combinations of features which go beyond or deviate from the combinations of features set forth in the recitations of the claims may be comprised by the invention.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

Therein,
- Fig. 1: shows a schematic flow diagram of an exemplary implementation of a computer implemented method according to the invention;
- Fig. 2: shows a schematic flow diagram of a part of a further exemplary implementation of a computer implemented method according to the invention; and
- Fig. 3: shows a schematic flow diagram of a further part of a further exemplary implementation of a computer implemented method according to the invention.

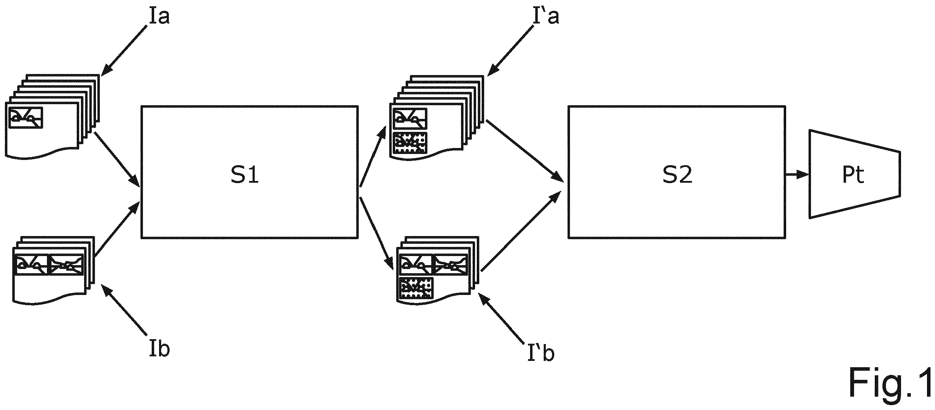

Fig. 1 shows a schematic flow diagram of an exemplary implementation of a computer implemented method for training a perception neural network Pu, Pt for autonomous or semi-autonomous driving applications according to the invention.

Therein, an input set la, lb of images, each image X1 of the input set la, lb of images comprising a number of h*w pixels at respective pixel positions, wherein h and w denote respective spatial dimensions of the respective image, is provided. The input set la, lb may for example comprise a subset of unlabeled images la and/or a subset of labeled images lb.

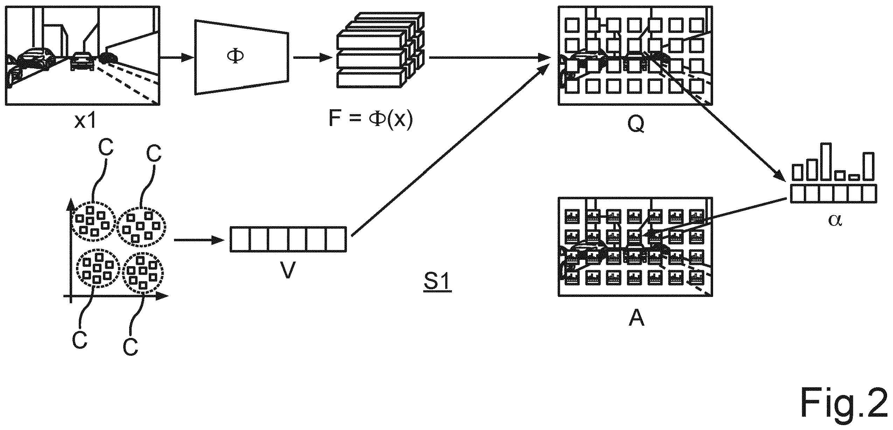

In step S1, an auxiliary label map A is generated for each of the images X1 of the input set la, lb, which is shown in more detail in the flow diagram of Fig. 2. The auxiliary label map A has the same spatial dimensions as the respective input image and therefore also has h*w pixel positions. For each pixel position, the auxiliary label map A comprises a corresponding local bag-of-words vector α.

To generate the auxiliary label maps A, an auxiliary neural network φ is applied to each image X1 of the input set la, lb in order to extract a corresponding feature map F = φ(X1) of size c*h*w, wherein c denotes a number of feature channels of the feature map F. The feature map F consists of h*w c-dimensional local feature sets, each of the local feature sets corresponding to one of the pixel positions. The auxiliary neural network φ may for example be a pre-trained CNN.

Then, a vocabulary V containing K visual words is generated by applying a k-means clustering algorithm, which is based on K clusters C, on the local feature sets of the all the pixel position. Each visual word of the vocabulary V is given by a respective centroid of one of the K clusters C.

For each pixel position of each of the images X1 of the input set la, lb, a respective closest visual word of the vocabulary is determined. Therein, the distance of the closest visual word from the respective local feature set is minimum in view of all visual words of the vocabulary. A respective quantized feature map Q is generated for each of the images X1 of the input set la, lb, wherein the quantized feature map Q consists of representations of the closest visual words, such as indices or their equivalent one-hot vector representations, for all pixel positions of the respective image.

For a given pixel position of the respective image X1, the corresponding local bag-of-words vector α is a K-dimensional vector, wherein each entry of the local bag-of-words vector α corresponds to one of the K visual words of the vocabulary V at the respective pixel position and depends on a number of times the respective visual word occurs in a predefined spatial neighborhood of the respective pixel position in the quantized feature map Q.

Referring again to Fig. 1, a respective auxiliary label map A is associated to each image of the input set la, lb, which results in an enhanced input set la', lb'. In step S2, the untrained or partially trained perception neural network Pu is trained in a semi-supervised way depending on the enhanced input set la', lb' by training the perception neural network Pu simultaneously on an auxiliary task and a main task, which is a visual perception task, for example an object detection task or a semantic segmentation task or a classification task, resulting in the trained perception neural network Pt, in particular after multiple training epochs. The auxiliary task comprises predicting the respective auxiliary label maps A of perturbed versions of the images of the input set la, lb or the enhanced input set la', lb', respectively.

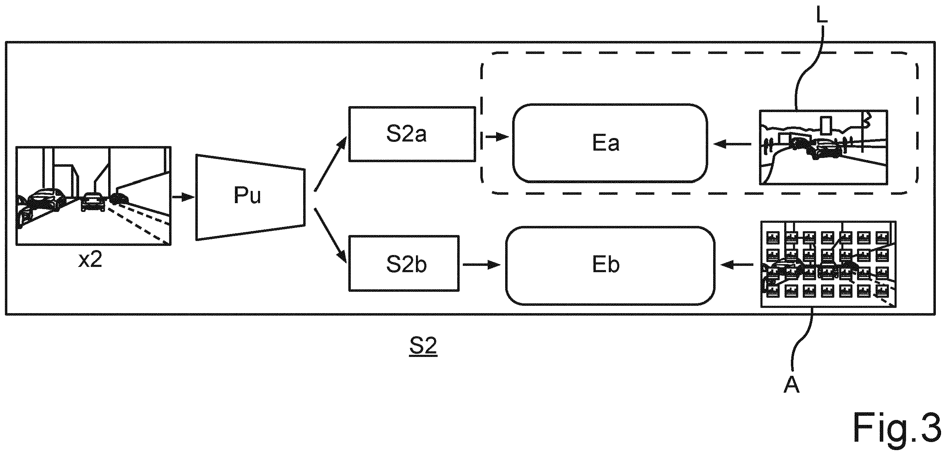

Fig. 3 shows an exemplary flow diagram for step S2. The perception neural network Pu is applied to the images X2 of the enhanced input set la', lb' to compute a main loss Ea in step S2a and, in parallel, an auxiliary loss Eb in step S2b. Therein, only images X2 of the labeled subset lb' are used for computing the main loss by using respective predetermined labels L. In case the input set la, lb and, consequently, the enhanced input set la', lb' do not contain the respective labeled subsets lb, lb', a further input set of labeled images may be used in step S2a for training the main task.

In order to compute the auxiliary loss Eb, the respective image X2 is perturbed and the loss for predicting the associated auxiliary label map A is computed. The perturbation may involve color jittering and/or image blurring and/or random conversion to grayscale and/or applying a geometric transformation and/or cutting out random regions.

Because the local bag-of-words-vectors α are created based on the unperturbed images X1 of the input set la, lb, to predict the auxiliary label maps A based on the respective perturbed image, the perception neural network Pt is inherently trained to learn to detect perturbation-invariant and context-aware features.

Since the perception neural network Pt has to predict the same auxiliary label map A labels regardless of the applied perturbation, it learns to detect image features that are invariant to the applied perturbations.

Due to the perturbation, in particular in case of cut-outs or geometric transformations, a certain local bag-of-words-vectors α might encode visual words that are coming from image regions that are missing in the perturbed image. Thus, the perception neural network Pt learns to detect features that would allow it to infer the visual words of missing image regions or, in other words, it learns context awareness.

Such perturbation-invariant and context-aware features usually belong to high-level visual cues of the image scene, for example objects or object parts. Thus, learning to detect such visual cues causes the perception neural network Pt to acquire better scene analysis skills and, as a consequence, to achieve better generalization performance.

According to the invention, as described, CNN-based segmentation or object detection models or other visual perception models for semi-autonomous or autonomous driving applications may be trained without requiring to manually label each image of the training dataset. Instead, the visual perception model may for example be trained using human annotations for only a small fraction of the training dataset, while for the remaining images may be unlabeled, which may be considered as a semi-supervised setting. Alternatively, proposed implementations may allow to train the perception model using labeled synthetic images, that is images generated by a graphics engine for example, and unlabeled real camera images. This may be considered as an unsupervised domain adaptation setting.

For example, the auxiliary task of predicting the auxiliary label maps may be implemented according to the following steps:
- An auxiliary decoder block dedicated to performing the auxiliary task may output in step S2b of Fig. 3 a K-dimensional vector for each pixel position in the image. These sets of K-dimensional vectors are passed from a softmax unit. After the softmax unit, these K-dimensional vectors have non-negative entries and they sum to one, that is the sum of the K entries of each K-dimensional vector is equal to 1. The predicted and softmax-processed K-dimensional vector for a pixel position u may be denoted as b[u].
- The K-dimensional auxiliary labels automatically generated during the step S1 are L1-normalized so that they also sum to 1. The L1 -normalized auxiliary label for a pixel position u may be denoted as a[u].
- In order to train the perception neural network on the auxiliary task, a Kullback-Leibler divergence loss, KL, may be applied between the predicted vector b[u] and the auxiliary label a[u], KL( a[u] ∥ b[u] ), for each pixel position u in an image.

To leverage unlabeled images for learning, a self-supervised technique based on automatically generating pixel-wise auxiliary labels from an image may be used. The resulting automatically-generated auxiliary labels may encode in a dense way spatially rich and high-level visual information about the scene depicted in an image. In particular, training the perception model on the auxiliary task of predicting such auxiliary label maps may cause the model to acquire better scene analysis skills and, as a consequence, to an improved generalization performance on the actual main task of interest, despite not having access to human annotations for all of the available images.

Since the proposed approach may allow to train a model without manually-annotating all the available images, it is faster and less expensive to use, since it requires less time for human annotations. Alternatively, it can exploit a vast amount of unlabeled images, leading to more accurate perception models.

Furthermore the proposed approach may be beneficial with respect to adversarial perturbations and detection of out-of-distribution, OOD, samples.

## Claims

1. A computer-implemented method of training a perception neural network (Pu, Pt) for autonomous or semi-autonomous driving applications, the method comprising the following steps:
i. Providing an input set (la, lb) of images, each image of the input set (la, lb) of images comprising a number of h*w pixels at respective pixel positions, wherein h and w denote respective spatial dimensions of the respective image;
ii. Extracting a respective feature map (F) of size c*h*w from each image of the input set (la, lb) by applying an auxiliary neural network (φ) to the respective image, wherein c denotes a number of feature channels of the feature map (F) and wherein the feature map (F) consists of a number h*w of c-dimensional local feature sets, each of the local feature sets corresponding to one of the pixel positions;
iii. Generating a vocabulary (V) of a number K of visual words by applying a k-means clustering algorithm, which is based on K clusters (C), on the local feature sets of all pixel positions, wherein each visual word of the vocabulary (V) is given by a respective centroid of one of the K clusters (C);
iv. Determining, for each pixel position of each of the images of the input set (la, lb), a respective closest visual word of the vocabulary (V), whose distance from the respective local feature set is minimum;
v. Generating a respective quantized feature map (Q) for each of the images of the input set (la, lb), wherein the quantized feature map (Q) consists of respective representations of the closest visual words for all pixel positions of the respective image;
vi. Generating, for each pixel position of each of the images of the input set (la, lb), a respective K-dimensional local bag-of-words vector (α), wherein each entry of the local bag-of-words vector (α) corresponds to one of the K visual words of the vocabulary (V) at the respective pixel position and depends on a number of times the respective visual word occurs in a predefined spatial neighborhood of the respective pixel position in the quantized feature map (Q) of the respective image;
vii. Using the local bag-of-words vectors (α) as auxiliary label maps (A) for training the perception neural network (Pu, Pt) in a semi-supervised way by training the perception neural network (Pu, Pt) simultaneously on a main task of the perception neural network (Pu, Pt), which is a visual perception task, and on an auxiliary task, which comprises predicting the respective auxiliary label maps (A) of perturbed versions of the images of the input set (la, lb).

2. The computer-implemented method according to claim 1, wherein according to step vi., the entry of the local bag-of-words vector (α)
- encodes the number of times the respective visual word occurs in the spatial neighborhood; or
- encodes whether or not the respective visual word occurs in the spatial neighborhood at least a predefined number of times or at least once.

3. The computer-implemented method according to one of claims 1 or 2, wherein
- the input set (lb) of images consists of labeled images (lb) and according to step vii., training the perception neural network (Pu, Pt) on the main task is based on the labeled images (lb); or
- the input set (la, lb) of images comprises unlabeled images (la) and labeled images (lb) and according to step vii., training the perception neural network (Pu, Pt) on the main task is based on the labeled images (lb); or
- the input set (la) of images consists of unlabeled images (la) and according to step vii., training the perception neural network (Pu, Pt) on the main task is based on a further input set of labeled images (lb).

4. The computer-implemented method according to one of the preceding claims, wherein the steps i. to vi. are repeated, wherein the auxiliary neural network (φ) is replaced by at least a part of the perception neural network (Pu, Pt) trained according to step vii.

5. The computer-implemented method according to one of the preceding claims, wherein the perturbed versions of the images of the input set (la, lb) are obtained by using color jittering, which includes for example randomly changing a contrast, a hue, and/or a saturation of the respective image.

6. The computer-implemented method according to one of the preceding claims, wherein the perturbed versions of the images of the input set (la, lb) are obtained using image blurring.

7. The computer-implemented method according to one of the preceding claims, wherein the perturbed versions of the images of the input set (la, lb) are obtained using a random conversion of the respective image to grayscale.

8. The computer-implemented method according to one of the preceding claims, wherein the perturbed versions of the images of the input set (la, lb) are obtained by applying a geometric transformation to the respective image, for example a random crop, a random rotation, a random change of aspect ratio, a random change of scale, and/or a horizontal or vertical flipping, while same geometric transformation is applied on the respective auxiliary label map (A).

9. The computer-implemented method according to one of the preceding claims, wherein the perturbed versions of the images of the input set (la, lb) are obtained by cutting out random regions from the respective image.

10. The computer-implemented method according to one of the preceding claims, wherein the auxiliary neural network (φ) is pre-trained using a supervised training on a labeled dataset, for example using ImageNet.

11. The computer-implemented method according to one of claims 1 to 9, wherein the auxiliary neural network (φ) is pre-trained using a self-supervised pre-training technique on the images of the input set (la, lb).

12. The computer-implemented method according to one of claims 1 to 9, wherein the auxiliary neural network (φ) is pre-trained using a supervised pre-training technique on labeled images (lb) of the input set (la, lb).

13. The computer-implemented method according to one of claims 1 to 9, wherein the auxiliary neural network (φ) is pre-trained using a semi-supervised pre-training technique on labeled images (lb) and unlabeled images (la) of the input set (la, lb).

14. The computer-implemented method according to one of claims 1 to 9, wherein the auxiliary neural network (φ) is built with randomly initialized weights.

15. A computer program product for processing data relating to training a perception neural network (Pu, Pt) for autonomous or semi-autonomous driving applications, the computer program product comprising a computer usable medium having computer usable program code embodied therewith, the computer usable program code being configured to perform the steps of any of the preceding claims 1 to 14.

16. An visual perception system for autonomous or semi-autonomous driving applications, the visual perception system comprising a computer program product for processing data relating to training a perception neural network (Pu, Pt) such as to perform the steps of any of the preceding claims 1 to 14.
